## Europäisches Patentamt
## European Patent Office
## Office européen des brevets

(19)

(11) Numéro de publication: **0 132 176**
**A1**

# (12) DEMANDE DE BREVET EUROPEEN

(21) Numéro de dépôt: **84401295.5**

(22) Date de dépôt: **21.06.84**

(51) Int. Cl.⁴: **B 23 K 11/36**

---

(30) Priorité: **22.06.83 FR 8310308**

(43) Date de publication de la demande:
**23.01.85 Bulletin 85/4**

(84) Etats contractants désignés:
**BE DE FR GB IT LU NL SE**

(71) Demandeur: **SOCIETE NOUVELLE CEDIMAS**
**Z.I. des Chanous rue Ampère**
**F-93330 Neuilly sur Marne(FR)**

(72) Inventeur: **Wack, André**
**23, Avenue Beauséjour**
**F-93160 Noisy-le-Grand(FR)**

(72) Inventeur: **Tétart, Jean-Louis**
**50, Avenue Foch**
**F-75016 Paris(FR)**

(74) Mandataire: **CABINET BONNET-THIRION**
**95 Boulevard Beaumarchais**
**F-75003 Paris(FR)**

---

(54) **Appareil à pince en ciseau pour l'assemblage d'éléments métalliques par points de soudure électrique.**

(57) L'invention concerne les appareils pour assembler par points de soudure électrique des éléments métalliques.

L'appareil suivant l'invention du genre comprenant une pince ayant deux bras en ciseau et un transformateur, se caractérise par le fait que les bras (31, 32) en alliage léger sont montés articulés autour d'une axe (X, X'), sur une paroi antérieure (30A) que comporte le transformateur (30), tandis que le secondaire (37, 38) constitué par une tresse souple comporte des brins terminaux (37A, 38A, 37B, 38B) qui sont, par leurs extrémités respectives, connectés à des porte-électrodes (39, 40) fixés de manière amovible à 1' extrémité des bras (31, 32).

Application: un tel appareil compact, et de poids récuit, comparativement aux appareils existants, est notamment destiné à être associé à l'extrémité d'un bras de robot.

EP 0 132 176 A1

./...

Croydon Printing Company Ltd.

FIG.3

"Appareil à pince en ciseau pour l'assemblage d'éléments métalliques par points de soudure électrique"

La présente invention concerne d'une manière générale, les appareils pour l'assemblage de deux pièces métalliques par points de soudure électrique, ces appareils étant du genre comprenant une pince en ciseau, et un transformateur.

De tels appareils de soudage sont bien connus, et ils équipent le plus souvent les postes d'une chaîne de fabrication, où sont soudés des éléments de carosserie de véhicules automobiles, tels que châssis, portes, et autres.

Dans le but d'automatiser les postes de soudure électrique par points, on a proposé de disposer les appareils de soudage en cause, en bout de bras "robots" asservis à une centrale de commande, en sorte de faire effectuer aux électrodes que comportent de telles pinces, le soudage de deux éléments métalliques.

Les installations actuellement connues de ce genre, donnent dans l'ensemble satisfaction ; néanmoins on s'est heurté jusqu'ici à des problèmes de poids concernant l'appareil de soudage disposé en bout du bras robot, d'où il résulte que les cadences de soudage se trouvent limitées par des déplacements relativement lents du bras robot, qui sont essentiellement dûs à l'inertie de l'appareil de soudage.

En effet, le poids des appareils actuels comprenant le transformateur, les pinces en ciseau, ainsi que les moyens pour commander en ouverture-fermeture les dites pinces, est un obstacle à des transferts rapides de ces appareils d'une position "de travail" pour l'exécution d'un point de soudure, à une position "escamotée" au cours de laquelle les éléments soudés sont acheminés vers un autre poste.

Dans les appareils connus, chaque bras de la pince en ciseau a une première fonction, qui est de constituer un conducteur de courant entre le transformateur et une électrode, et une seconde fonction qui consiste à supporter les efforts mécaniques lors de l'exécution d'une soudure.

Dans le but d'allier les deux fonctions précitées, chaque bras de pince est réalisé en un alliage de cuivre, afin de permettre le passage du courant avec une résistance minimale, et il est largement dimensionné en sorte de supporter, avec une marge de sécurité, les efforts mécaniques résultant de la pression que lesdits bras exercent sur les éléments à assembler lors de l'opération de soudage.

On conçoit que les bras de pinces ainsi réalisés présentent à eux seuls un poids non négligeable.

On a bien proposé d'alléger les pinces, et il en est ainsi dans le brevet des Etats-Unis d'Amérique US-A 4114 017 (SMITH) qui décrit un appareil comprenant des pinces en ciseaux en métal léger reliées électriquement par une tresse à un transformateur, chacun des bras de la pince portant une électrode en cuivre.

Suivant ce document, le secondaire est amené aux électrodes à travers la tresse et les bras de la pince; les électrodes en cuivre précitées sont montées en porte-à-faux. Etant donné ce montage on comprend que les bras en alliage léger permettent des gains de poids, mais que la résistance mécanique au droit des électrodes est limitée. Suivant cet appareil l'un des bras en cause porte un commutateur double pour la connexion à un transformateur conventionnel, ainsi qu'un organe de commande, d'où il résulte un encombrement non négligeable limitant les possibilités d'utilisation.

On a aussi proposé des appareils pour assembler deux éléments métalliques par points de soudure électrique, dans lesquels le transformateur est incorporé, de manière à obtenir un ensemble compact.

Il en est ainsi dans le brevet des Etats-Unis d'Amérique US-A- 2 063 257 (MARTIN) suivant lequel les bras de la pince sont directement connectés au secondaire du transformateur qui, lui, est incorporé dans une coquille en deux parties portant les électrodes, l'une de ces parties étant pivotante sous l'impulsion d'un vérin.

On observe qu'un tel appareil se distingue d'un appareil selon l'invention en particulier par le fait qu'il s'agit d'un appareil de soudage portatif, que les bras de la pince portant les électrodes sont conducteurs, que l'appareil est alimenté par un courant haute fréquence, qu'il est limité dans son utilisation à la réalisation de micro-soudures, n'impliquant pas la nécessité d'un circuit de refroidissement.

A titre d'information le brevet US-A-1 993 961 (FORD MOTOR) concerne un appareil de soudage par points, portable, qui comporte un circuit de refroidissement, et des électrodes de soudage à mouvement rectiligne.

D'une manière générale, les appareils de soudage connus présentent des lacunes qu'il s'agisse du poids, de l'encombrement, de la résistance mécanique des bras, ou bien encore de la sécurité qui peut être mise en doute étant donné que les bras de la pince que comportent tous les appareils connus sont conducteurs.

De plus, et suivant un autre inconvénient commun à tous ces appareils connus, la maintenance n'est pas aisée par le fait que l'accessibilité au secondaire requiert le plus souvent le démontage pratiquement total de l'appareil, d'où il résulte non seulement une immobilisation de l'appareil, mais aussi des frais de main-d'oeuvre non négligeables.

La présente invention a pour objet un appareil pour l'assemblage de pièces métalliques par points de soudure électrique, destiné à équiper plus particulièrement -bien que non exclusivement- un bras "robot" dont le poids, la structure, l'encombrement, et les caractéristiques de résistance mécanique conduisent à conférer à l'appareil, de nouvelles possibilités d'utilisation ainsi que des performances sensiblement améliorées comparativement à la technique antérieure.

Suivant l'invention, l'appareil pour l'assemblage d'éléments métalliques, par points de soudure électrique, du genre comprenant, une pince avec deux bras en ciseau et un transformateur, les deux bras étant montés articulés autour d'un axe commun et, chaque bras -réalisé en alliage léger- portant à son extrémité libre, une électrode connectée électriquement aux extrémités libres du secondaire d'un transformateur comportant, de manière connue en soi, dans un boîtier au moins un tore magnétique et des bobines primaires, les dits bras étant commandés en ouverture-fermeture à l'aide d'un vérin associé, et le secondaire étant constitué d'un élément semirigide, de configuration globale en U est caractérisé par le fait que les bras sont montés articulés sur une face antérieure du boîtier du transformateur, et en ce que le secondaire à l'intérieur du boîtier et au-delà de la face antérieure précitée, jusqu'aux électrodes auxquelles il est connecté, est enfermé dans une gaine étanche et isolante dans laquelle circule un fluide parcourant un circuit de refroidissement, ledit secondaire comprenant en outre des moyens propres à son extraction du boîtier, par les faces antérieure et/ou postérieure de ce dernier.

Suivant une autre caractéristique de l'invention, du côté postérieur du boîtier jusqu'aux électrodes, le secondaire est logé dans une tuyauterie isolante souple qui est adaptée à ménager avec le secondaire un espace annulaire dans lequel circule le fluide de refroidissement.

Suivant une autre caractéristique de l'invention le secondaire est constitué par deux éléments semblables parallèles de configuration globalement en U dont les branches sont accolées de la paroi antérieure du boîtier jusqu'aux électrodes, tandis qu'elles sont espacées dans le boîtier de ladite paroi antérieure jusqu'au voisinage de la paroi postérieure.

Suivant encore une autre caractéristique de l'invention le secondaire comprend du côté postérieur du boîtier, des moyens aptes à permettre son extraction du boîtier par l'avant de celui-ci, et/ou du côté antérieur des moyens pour son extraction du boîtier par son côté postérieur.

Suivant encore une autre caractéristique de l'invention, les bras de la pince présentent en section transversale une forme globalement en U leur conférant une bonne rigidité et, partant, des caractéristiques de résistance mécanique élevée; de plus, la section en U des bras est particulièrement adaptée à recevoir la gaine étanche et isolante.

Un tel appareil présente des avantages indéniables comparativement à la technique antérieure.

Les bras de la pince étant réalisés en matériau léger et montés directement articulés sur une paroi antérieure du transformateur, on obtient un appareil compact et dans lequel le poids est notablement abaissé comparativement à un appareil suivant la technique antérieure.

Etant donné la structure du secondaire (liaison directe d'un porte-électrode à l'autre), les contacts sont réduits à un strict minimum ; on entend par liaison directe le fait que les tresses font office de boucle secondaire du transformateur.

La maintenance est notablement simplifiée par une accessibilité remarquable au secondaire qui peut, si besoin est, être extrait aisément de l'appareil.

Le circuit de refroidissement agissant sur la totalité de l'appareil, celui-ci peut être utilisé pratiquement sans interruption donnant ainsi lieu à des cadences de fonctionnement élevées.

Les bras de la pince en ciseau n'étant plus conducteurs, le matériau utilisé -de préférence léger- tel qu'un alliage d'aluminium permet de conférer à ceux-ci un profil approprié pour l'obtention d'une résistance mécanique apte à supporter des efforts importants.

Un appareil suivant l'invention résoud donc de manière simple les problèmes jusqu'ici posés en matière de soudage électrique par points, et notamment les problèmes posés par la disposition des appareils en cause en bout de bras robots.

D'autres caractéristiques et avantages de l'invention ressortiront d'ailleurs de la description qui va suivre donnée à titre d'exemple en référence aux dessins annexés dans lesquels :

la figure 1 est une vue en élévation montrant de façon schématique un appareil de soudage par points illustrant la technique actuelle ;

la figure 2 est une vue en perspective partielle et schématique, d'une forme de réalisation d'un appareil conformément à l'invention pour l'assemblage d'éléments métalliques par soudure par points, cette vue montrant plus particulièrement la partie antérieure de l'appareil avec la pince en ciseau ;

la figure 3 est une vue en élévation d'une forme de réalisation de l'appareil conformément à l'invention ;

la figure 4 est une vue en plan correspondante ;

la figure 5 est une vue en coupe transversale du transformateur suivant la ligne V-V de la figure 3 ;

la figure 6 est une vue en coupe longitudinale d'une partie terminale d'un bras de la pince ciseau ;

la figure 7 montre, en perspective, le circuit secondaire seul ;

la figure 8 est une vue à plus grande échelle d'un brin du secondaire enfermé dans la gaine isolante ;

la figure 9 est une vue schématique du circuit de refroidissement associé à l'appareil ;

la figure 10 montre partiellement de façon schématique une autre forme de réalisation du secondaire.

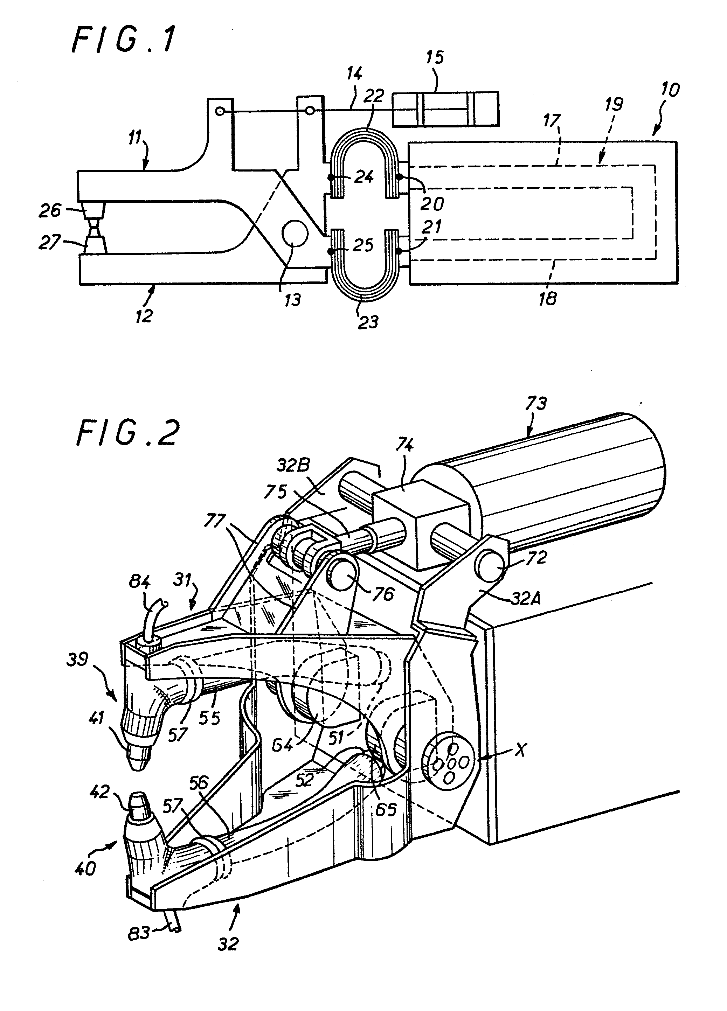

En référence à la figure 1, l'appareil pour l'assemblage de deux éléments métalliques à l'aide de points de soudure électrique comprend, dans un boîtier, un transformateur indiqué dans son ensemble par 10, deux bras 11, 12, de pince ciseau articulés autour d'un axe 13, qui sont commandés en ouverture-fermeture par la tige 14 d'un vérin 15. L'axe 13 est supporté par un palier non représenté, de même que le vérin 15. Les brins terminaux 17, 18, du secondaire 19, sont connectés en 20, 21, de manière connue en soi, à des tresses 22, 23, elles-mêmes connectées en 24,25, respectivement aux bras 11, 12, de la pince en ciseau. Les bras sont réalisés en alliage de cuivre et convenablement dimensionnés afin d'une part, de permettre le passage du courant, et, d'autre part, de résister aux efforts mécaniques (action du vérin) lors de l'exécution d'un point de soudure.

A leurs extrémités respectives les bras de pince 11, 12, portent chacun une électrode 26,27.

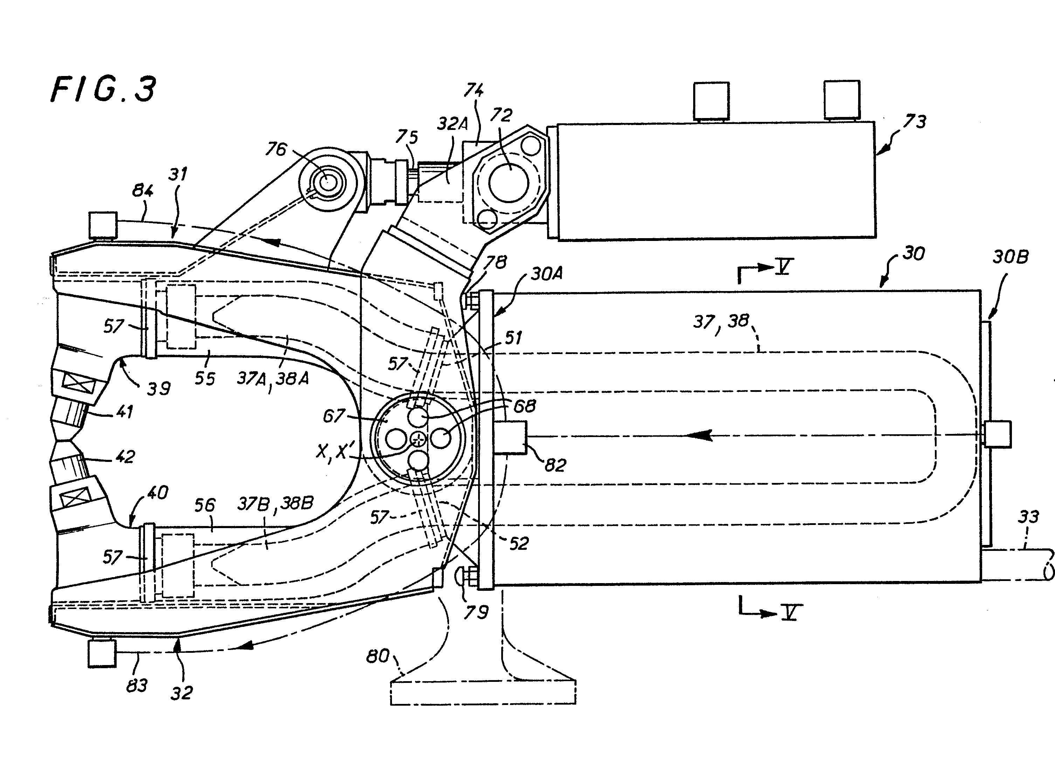

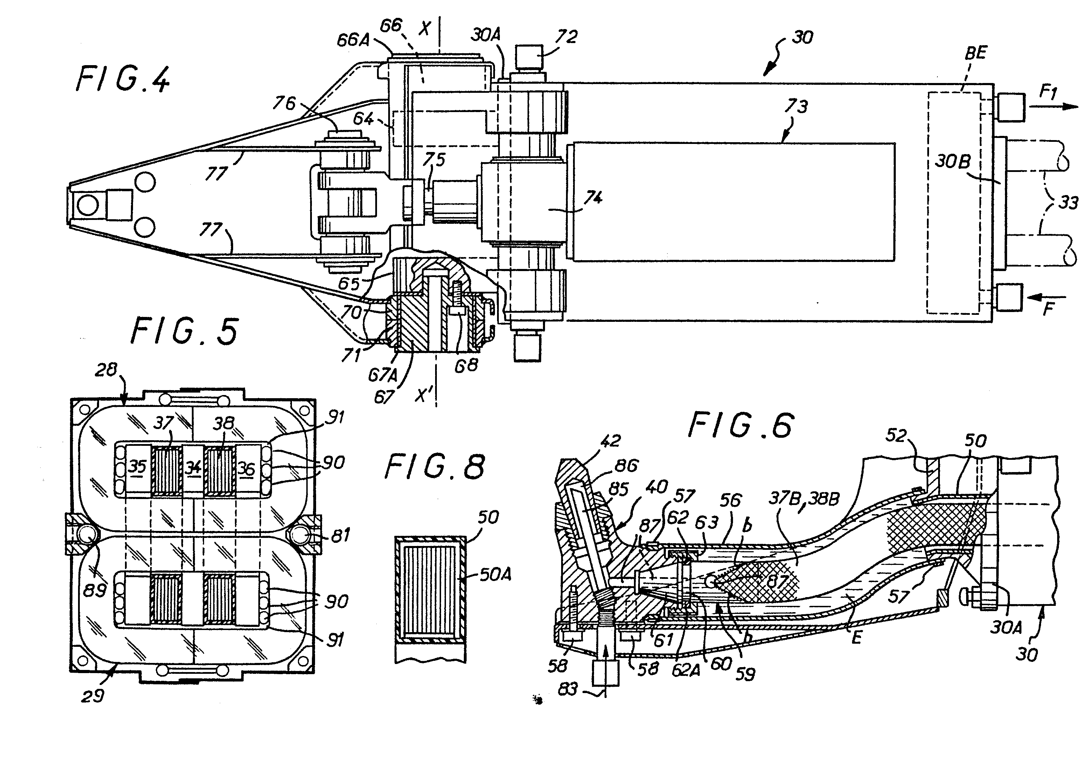

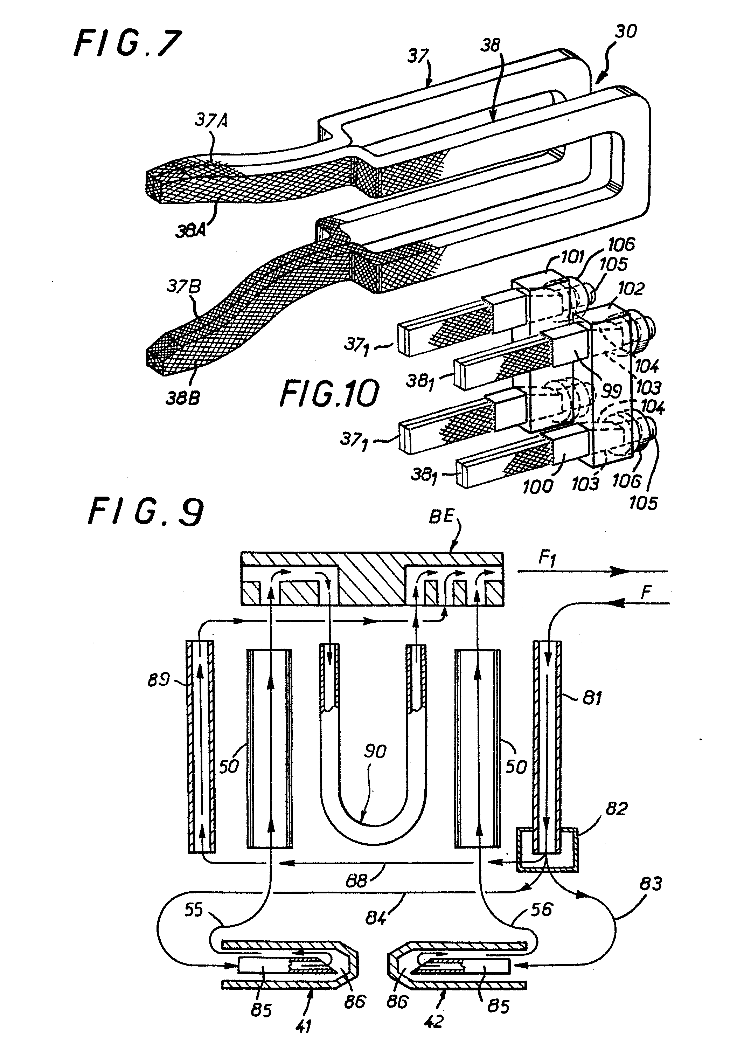

Suivant une forme de réalisation d'un appareil conformément à l'invention, représenté aux figures 2 à 10, un tel appareil comprend un transformateur logé dans un boîtier 30 ayant une face dite antérieure 30A, fermée par un couvercle adapté à porter les bras 31, 32, d'une pince ciseau, et une face dite postérieure 30B, amovible et adaptée à permettre son raccordement à une amenée d'eau sous pression et le passage d'un câble d'alimentation 33 du circuit primaire. Dans l' exemple de réalisation représenté le transformateur (figure 5 en particulier) comprend deux tores magnétiques 28,29, trois bobines primaires 34, 35, 36, et entre les bobines primaires deux boucles de secondaire 37, 38, (voir aussi figures 3 et 7) montées en parallèle, et de configuration globale en U ; les brins terminaux 37A, 38A, 37B, 38B, desdites boucles sont accolés, et ils sont à leurs extrémités respectives, connectés à des porte-électrodes 39, 40, dont chacun reçoit une électrode 41, 42.

Les boucles 37, 38, du secondaire constituées à l'aide de tresses souples, sont entourées (figure 8 en particulier) par une gaine 50 en matériau isolant qui s'étend sensiblement de la face postérieure 30B du boîtier 30 jusque dans des embouts 51, 52, (figures 2 et 3) que comporte la face antérieure 30A du boîtier du transformateur; un espace annulaire 50A est ménagé entre la gaine 50 et le secondaire en vue de la circulation du fluide de refroidissement ainsi qu'il sera explicité plus loin.

Des embouts précités, les brins terminaux accolés 37A, 38A, 37B, 38B, des boucles du secondaire sont insérés chacun dans une tuyauterie souple en matériau isolant 55, 56, s'étendant sur l'intérieur des bras, les dites tuyauteries étant bien entendu réunies de façon étanche par leurs extrémités d'une part, aux embouts 51, 52, de la face antérieure, et, d'autre part, aux porte-électrodes 39, 40, aménagés à cet effet. De plus, les tuyauteries en cause sont prévues de manière de ménager un espace annulaire E entre les brins terminaux du secondaire qu'elles reçoivent et leur surface intérieure, pour la circulation du fluide de refroidissement.

Des colliers 57 assurent la liaison étanche des tuyauteries souples 55, 56, avec les embouts 51, 52, et les porte-électrodes 39, 40.

Les porte-électrodes 39, 40, sont solidarisés aux bras 31, 32, de toute manière convenable par exemple par vis 58 (figure 6) avec interposition de moyens isolants non représentés sur les dessins.

Sur la figure 6 précitée les extrémités des brins 37A, 38A, 37B, 38B, du secondaire sont taillées en biseau et sont connectées par exemple à l'aide d'une brasure b à une cosse 59, comportant une gorge 60 dans le prolongement de laquelle est ménagée une surface tronconique 61; des segments 62, 62A, engagés dans la gorge précitée, assurent -par coopération avec un écrou 63, se vissant sur un filetage prévu à cet effet sur le porte-électrode- l'assujettissement des brins terminaux du secondaire avec chaque porte-électrode 39, 40, correspondant.

Ainsi qu'on le voit, les boucles 37, 38, du secondaire ne comportent qu'un seul point de raccordement et ce, au niveau du porte-électrode, en sorte que les pertes de courant sont réduites à un strict minimum.

Chacun des bras 31, 32, est métallique, par exemple en alliage d'aluminium, afin que le poids de ceux-ci soit le moins élevé possible.

Avantageusement, ces bras présentent globalement une section en forme d'U, leur conférant ainsi une rigidité apte à encaisser les efforts mécaniques lors du serrage pour la réalisation d'un point de soudure. Les ouvertures des profils en U sont en vis-à-vis, et sont mises à profit pour loger les tuyauteries étanches et isolantes 55 et 56 qui se trouvent ainsi protégées, sans impliquer un quelconque encombrement supplémentaire.

Les bras 31, 32, l'un le 32 étant dit "inférieur"et 1' autre le 31, dit "supérieur" sont montés articulés sur la face antérieure 30A du boîtier du transformateur 30.

A cet effet, (voir figure 4 en particulier) la face antérieure 30A comporte en façade deux pattes 64, 65, alignées sur un même axe ; sur la face extérieure de chacune des pattes est rapporté un palier amovible 66, 67, fixé à la patte correspondante par des vis 68. Les bras 31, 32, sont quant à eux pourvus de douilles 70, 71, adaptées à être engagées sur les paliers en cause, en sorte que chaque bras est monté articulé autour des paliers 66, 67. En outre, chaque palier comporte une collerette frontale 66A, 67A, destinée à former une butée latérale aux douilles précitées 70, 71, et à maintenir ainsi les bras sans jeu latéral excessif. Le bras inférieur 32 est prolongé vers le haut par deux extensions 32A, 32B, (figure 3) dont les parties terminales sont adaptées à porter, par l'intermédiaire d'un axe 72, un vérin 73 comportant à cet effet une noix de raccordement 74.

La tige de piston 75 du vérin en cause est, quant à elle, assemblée par axe 76 à une chape 77 solidaire du bras supérieur 31.

On obtient ainsi une pince à deux bras en ciseau, dont les bras, ainsi que le vérin, sont montés flottants. Des butées réglables 78, 79, (figure 3) portées par le couvercle 30A du transformateur sont avantageusement prévues pour déterminer la course des bras en ouverture-fermeture afin d'ajuster l' espacement d'ouverture maximale en fonction de l'épaisseur des éléments métalliques à assembler.

La face antérieure 30A du boîtier du transformateur est, le cas échéant, prévue aussi avec une semelle 80 pour sa fixation à un bras de "robot".

Dans un tel appareil, il est nécessaire que le transformateur d'une part, et chacune des électrodes d'autre part, soient refroidis ; à cet effet, l'ensemble est doté d'un circuit de refroidissement par circulation forcée d'un fluide, notamment de l'eau, ainsi qu'il va maintenant être décrit en particulier aux figures 3, 5 et 9.

L'eau est amenée à la face supérieure du boîtier du transformateur (flèche F) et circule dans une tubulure 81 longeant les tores magnétiques 28, 29, de la face postérieure vers la face antérieure du transformateur ; cette tubulure débouche dans un raccord à trois voies 82, deux de celles-ci assurant le refroidissement des électrodes par circulation d'eau au moyen de deux canalisations distinctes 83, 84 ; à cet effet, les électrodes 41, 42, comportent intérieurement (figure 6) un tuyau 85 connecté aux canalisations précitées et l'extrémité libre de ce tuyau débouche dans un chambrage 86 ménagé autour de celui-ci.

Du chambrage précité 86, l'eau est dirigée par un canal 87 ménagé dans chaque porte-électrode, et dans chaque cosse 59, dans l'espace E ménagé entre les brins terminaux du secondaire et les tubulures correspondantes 55, 56, et ensuite dans les gaines 50 des boucles du secondaire, pour déboucher dans une boîte à eau BE prévue vers la face postérieure du transformateur. Quant à la troisième voie du raccord 82 précité, elle alimente, par un conduit 88, une tubulure 89 -symétrique par

10

rapport à la tubulure 81- qui débouche dans ladite boîte à eau BE.

Cette partie du circuit de refroidissement refroidit donc les points chauds des tores magnétiques 28, 29, les électrodes 41, 42, les brins terminaux 37A, 38A, 37B, 38B et les boucles 37, 38, du secondaire.

En ce qui concerne le refroidissement des bobines primaires centrale 34, et latérales 35, 36, celui-ci est assuré par l'eau provenant de l'une, ou des deux boucles du secondaire, à partir de la boîte à eau. Suivant le schéma illustré, l'eau provenant de l'une des gaines de boucle du secondaire, est dirigée dans des canalisations 90 (voir aussi figure 5) disposées dans un espace 91 ménagé entre les bobines primaires latérales 35, 36, et les tores magnétiques 28, 29.

Après circulation dans ces canalisations, l'eau est dirigée dans la boîte à eau BE et renvoyée vers un retour (flèche F1).

Suivant la forme de réalisation ci-dessus décrite, on observe que les bras de la pince n'étant pas conducteurs, le matériau utilisé pour les constituer n'a pas à présenter une bonne conductibilité électrique ; ils peuvent de ce fait être réalisés en un matériau quelconque léger et résistant. Par ailleurs, la maintenance de l'appareil est facilitée du fait que le secondaire peut être extrait par la partie postérieure après avoir déconnecté les deux seules liaisons électriques nécessitées dans un tel appareil au niveau du secondaire à savoir la connexion des brins terminaux 37B, 38B, avec les porte-électrodes.

Mais, selon un autre exemple de réalisation représenté à la figure 10, le secondaire est globalement analogue à celui précédemment décrit sauf que chaque boucle du secondaire, vers la partie postérieure du boîtier du transformateur, en d'autres termes chaque base du U formé par les boucles est constituée par des barres 101, 102, engagées sur des cosses 99, 100, dont sont munies chacune des extrémités des brins $37_1$, $38_1$; les barres 101, 102, comportent chacune deux alésages ayant deux faces inclinées dans le sens de la longueur en formant ensemble une surface sensiblement pyramidale 103 adaptée à s' emboîter sur une partie terminale en correspondance 104 prévue dans les cosses 99, 100, qui sont par ailleurs dotées de tronçons filetés terminaux 105 propres à la réception d'écrous de blocage 106.

Dans le cas ci-dessus les brins terminaux accolés 37A, 38A, 37B, 38B, du secondaire sont de préférence solidarisés directement par brasure avec les porte-électrodes 39, 40, les cosses 59 étant supprimées, et les porte-électrodes étant aménagés avec des orifices permettant la circulation du fluide de refroidissement.

On observe que l'extraction du secondaire par l'avant de l'appareil peut être effectuée, si nécessaire, simplement en dévissant les écrous 106 extérieurs au boîtier du transformateur, les barrettes de raccordement 101, 102, en cuivre, étant quant à elles intérieures au boîtier du transformateur.

On conçoit que le poids et l'encombrement d'un tel appareil sont nettement moindres que le poids et l'encombrement des appareils antérieurs ; il en résulte des performances sensiblement améliorées en ce sens que, disposé à l'extrémité d'un bras de robot, l'inertie qui est nettement moins importante que par le passé, permet une augmentation notable des cadences de soudage par réduction notable des temps morts entre deux soudures consécutives.

Bien entendu l'invention n'est pas limitée à la forme d'exécution choisie et représentée, laquelle peut au contraire faire l'objet de modifications, sans pour autant sortir du cadre de l'invention. C'est ainsi que le transformateur pourrait ne comporter qu'une seule boucle de secondaire avec deux bobines primaires et un circuit de refroidissement associé.

REVENDICATIONS

1. Appareil pour l'assemblage d'éléments métalliques par points de soudure électrique du genre comprenant, une pince avec deux bras en ciseau et un transformateur, les deux bras étant montés articulés autour d'un axe commun, et chaque bras -réalisé en alliaje léger- portant à son extrémité libre, une électrode connectée électriquement aux extrémités libres du secondaire d'un transformateur comportant, de manière connue en soi, dans un boîtier au moins un tore magnétique et des bobines primaires, lesdits bras étant commandés en ouverture-fermeture à l'aide d'un vérin associé, et le secondaire étant constitué d'un élément semi-rigide, de configuration globale en U, caractérisé par le fait que les bras (31, 32) sont montés articulés sur une face antérieure (30A) du boîtier (30) du transformateur, et en ce que le secondaire (37,38) à l'intérieur du boîtier et au-delà de la face antérieure précitée (30A) jusqu'aux électrodes (41, 42) auxquelles il est connecté, est enfermé dans une gaine étanche et isolante dans laquelle circule un fluide parcourant un circuit de refroidissement, ledit secondaire comprenant en outre des moyens propres à son extraction du boîtier, par les faces antérieure (30A) et/ou postérieure (30B) de ce dernier.

2. Appareil suivant la revendication 1, caractérisé en ce que les bras sont adaptés à recevoir chacun à une extrémité un porte-électrode (39,40) qui est isolé électriquement du bras qui le porte (31,32).

3. Appareil suivant l'une quelconque des revendications précédentes, caractérisé par le fait que le secondaire comprend deux boucles ouvertes parallèles (37, 38) de configuration globalement en U dont les branches (37A, 38A; 37B, 38B) sont accolées de la face antérieure (30A) du boîtier jusqu'à la liaison avec des électrodes, tandis qu'elles sont espacées dans le boîtier de la dite face antérieure (30A) jusqu'au voisinage de la face postérieure (30B).

4. Appareil suivant l'une quelconque des revendications précédentes, caractérisé en ce que les branches terminales accolées (37A, 38A, 37B, 38B) du secondaire, sont connectées respectivement à chaque porte-électrode (40,41) par l'intermédiaire d'une cosse (59) à laquelle elles sont soudées et d'un écrou (62) se vissant sur un filetage correspondant ménagé sur le porte-électrode, de manière à permettre l'extraction du secondaire du côté de la face postérieure (30B) du boîtier, ladite face étant fixée au boîtier (30) de façon amovible.

5. Appareil suivant l'une quelconque des revendications 3 ou 4, caractérisé en ce que, du côté opposé aux branches terminales précitées, les bases des U sont fixées aux branches de manière amovible, pour former des boucles ouvertes de ce côté et permettre l'extraction du secondaire du côté de la face antérieure (30A) du boîtier (30) du transformateur.

6. Appareil suivant la revendication 5, caractérisé en ce que la base de chaque boucle en U, est constituée par des barrettes (101, 102) fixées sur des cosses (99, 100) elles-mêmes soudées aux brins (37, 38) des boucles en U.

7. Appareil suivant la revendication 1, caractérisé en ce que chaque bras (31, 32) présente, en section transversale, un profil globalement en U dans lequel est disposée la tuyauterie isolante souple (55, 56), dont les extrémités sont fixées de manière étanche, respectivement à un embout (51, 52) prévu sur la face antérieure (30A) du boîtier (30) du transformateur, et à une partie terminale d'un porte-électrode (39, 40), les dites tuyauteries ménageant avec le secondaire qu'elles logent un espace annulaire (E) pour la circulation du fluide de refroidissement.

8. Appareil suivant la revendication 4, caractérisé en ce que la cosse (59) présente une gorge circulaire (60) sensiblement médiane à son axe longitudinal, qui est destinée à recevoir une paire de segments (62, 62A) propres à coopérer avec l'écrou précité (63), ladite cosse comportant en outre une partie terminale entaillée en V apte à recevoir une extrémité correspondante d'un brin du secondaire (37A, 38A, 37B, 38B) qui lui est solidarisée par soudure, et une partie terminale opposée à la précédente, présentant une surface tronconique (61) emboîtable dans un logement ménagé dans le porte-électrode correspondant (39, 40).

9. Appareil suivant l'une quelconque des revendications précédentes, caractérisé en ce que chaque porte-électrode (39, 40) comporte un tuyau (85) propre à être raccordé à une amenée de fluide de refroidissement (83, 84), ledit tuyau débouchant lui-même dans un chambrage annulaire (86) ménagé dans l'électrode, et qui est en communication avec l'espace annulaire précité (E) par l'intermédiaire de passages (87) ménagés dans chaque porte-électrode (39,40) et dans la cosse (59).

10. Appareil suivant l'une quelconque des revendications précédentes, caractérisé en ce que la paroi antérieure (30A) du boîtier du transformateur porte sensiblement en son centre deux pattes (64,65), chacune des pattes portant un palier (66, 67) sur lesquels sont montées en rotation des douilles (70,71) solidaires respectivement desdits bras (31, 32).

11. Appareil suivant la revendication 10, caractérisé en ce que chaque palier (66, 67) est monté amovible sur une patte et comporte une collerette (66A, 67A) formant butée latérale aux bras en ciseau (31, 32).

12. Appareil suivant la revendication 1, caractérisé en ce que le circuit de refroidissement comprend une série d' éléments tubulaires (81, 89, 90) logeant les tores magnétiques (28, 29) et les bobines primaires latérales (35, 36), une gaine isolante (50) suivant le parcours des boucles (37, 38) du secondaire, en ménageant avec celles-ci un espace annulaire (50A) pour la circulation d'un fluide, ladite gaine (50) étant en communication avec les espaces annulaires (E) ménagés entre les tubulures (55, 56) et les brins terminaux (37A, 38A, 37B, 38B) du secondaire, le circuit étant établi en sorte d'effectuer conjointement le refroidissement des points chauds des tores magnétiques (28, 29), des électrodes (41, 42), puis du secondaire, et des bobines primaires, et ce, à partir d'une boîte à eau (BE) prévue côté postérieur du transformateur.

13. Appareil suivant l'une quelconque des revendications précédentes, caractérisé en ce que la paroi antérieure (30A) du boîtier du transformateur (30) porte un socle (80) adapté à la fixation dudit appareil en partie terminale d'un bras robot.

14. Appareil suivant l'une quelconque des revendications précédentes, caractérisé en ce que l'un des bras (32) de la pince en ciseau comporte au moins un prolongement (32A) s'

15

étendant au-delà de l'axe de rotation (X,X' desdits bras, un tel prolongement étant propre à l'attelage d'un vérin (73) dont la tige de piston (75) est reliée par articulation (76) à l'autre bras (31) de manière telle que l'ensemble est "flottant" par rapport au transformateur.

FIG.1

FIG.2

# FIG.3

74
75
32A
72
73
76
31
84
78
30A
30
30B
57
51
V
39
55
37A,38A
57
37,38
41
67
68
42
X,X'
82
40
56
37B,38B
57
33
57
52
79
V
80
83
32

2/4

0132176

FIG.4

FIG.5

FIG.6

FIG.8

**FIG.7**

**FIG.10**

**FIG.9**

Office européen
des brevets

RAPPORT DE RECHERCHE EUROPEENNE

0132176
Numéro de la demande

EP 84 40 1295

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| A | FR-A-2 165 242 (WACK et al.) <br> * page 7 * | 1 | B 23 K 11/36 |
| A | US-A-4 114 017 (SMITH) <br> * résumé * | 1 | |
| A | US-A-2 063 257 (MARTIN) | | |
| A | FR-A-2 077 666 (CONSTRUCTIONS EUROPEENNES DE SOUDAGE) | | |
| A | GB-A- 544 322 (MALLORY) | | |
| A | US-A-1 993 961 (GROVEN) | | DOMAINES TECHNIQUES RECHERCHES (Int. Cl. 3) <br><br> B 23 K 11 |

Le présent rapport de recherche a été établi pour toutes les revendications

| Lieu de la recherche | Date d'achèvement de la recherche | Examinateur |
|---|---|---|
| LA HAYE | 17-09-1984 | HOORNAERT W. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03.82